**Europäisches Patentamt**

**European Patent Office**

**Office européen des brevets**

(11) Veröffentlichungsnummer: **0 151 727**
**A2**

## (12) EUROPÄISCHE PATENTANMELDUNG

(21) Anmeldenummer: 84114895.0

(22) Anmeldetag: 07.12.84

(51) Int. Cl.⁴: **C 10 B 39/02**

(30) Priorität: 10.02.84 DE 3404684

(43) Veröffentlichungstag der Anmeldung:
21.08.85 Patentblatt 85/34

(84) Benannte Vertragsstaaten:
BE DE FR GB

(71) Anmelder: Stahlwerke Peine-Salzgitter AG
Postfach 41 11 80
D-3320 Salzgitter 41(DE)

(71) Anmelder: Didier Engineering GmbH
Alfredstrasse 28 Postfach 10 09 45
D-4300 Essen 1(DE)

(71) Anmelder: Dr. C. Otto & Comp. Gesellschaft mit
beschränkter Haftung
Christstrasse 9 Postfach 10 18 50
D-4630 Bochum 1(DE)

(72) Erfinder: Tietze, Jürgen, Dr.-Ing.
Universitätsstrasse 83
D-4630 Bochum 1(DE)

(72) Erfinder: Altmeyer, Wolfgang, Dipl.-Ing.
Böcklingweg 16
D-4630 Bochum 6(DE)

(72) Erfinder: Danguillier, Wilhelm
Friederikastrasse 88
D-4630 Bochum 1(DE)

(72) Erfinder: Teichert, Ernst, Dr.-Ing.
Gerhard-Lukas-Strasse 35
D-3152 Ilsede(DE)

(72) Erfinder: Wagener, Dietrich, Prof. Dr.-Ing.
Hesselerkamp 7a
D-4300 Essen 16(DE)

(72) Erfinder: Galow, Manfred
Vosselerweg 2
D-4300 Essen 12(DE)

(74) Vertreter: Kaiser, Henning
c/o Salzgitter AG Postfach 41 11 29
D-3320 Salzgitter 41(DE)

(54) Verfahren zur Nutzung der beim Trockenkühlen von Koks mittels eines Gases anfallenden fühlbaren Wärme.

(57) Die Erfindung betrifft ein Kokstrockenkühlverfahren mit Nutzung der anfallenden fühlbaren Wärme, bei dem ein Brenngas als Kreislaufgas nach Verlassen des Abhitzedampfkessels vor Eintritt in die Kokskühlkammer in einem kombinierten Wascher-Kühler auf etwa Kühlmitteltemperatur heruntergekühlt und dabei entstaubt wird. Weiterhin soll das den Wascher-Kühler verlassende ireislaufabgas vor Eintritt in die Kokskühlkammer durch ein Kühlaggregat ähnlich einer Wärmepumpe geführt werden. Die Heizwerteinstellung des Brenngases erfolgt durch Einspeisen von Stickstoff oder gereinigtem Raichgas in das kalte Kreislaufgas vor dem Kokstrockenkühler und/oder durch Einpeisen von Luft in das heiße Kreislaufgas hinter dem Trockenkühler. Vor dem Trockenkühler wird überschüssiges kaltes Kreislaufgas abgezogen und dem Unterfeuerungsgas für die Koksöfen zugemischt und überschüssiges Kreislaufgas kann zwischen dem Trockenkühler und der Vorerhitzungsanlage abgezogen, durch einen Abhitzekessel geleitet und dem die Vorerhitzungsanlage verlassenden Gas beigemischt werden. Zur Einstellung der Betriebstemperatur kann abgekühltes Gas entnommen und in die von dem Trockenkühler zur Vorerhitzungsanlage führende Leitung eingespeist werden.

Fig. 1

Verfahren zur Nutzung der beim Trockenkühlen von Koks mittels eines Gases anfallenden fühlbaren Wärme

Die Erfindung betrifft ein Verfahren zur Nutzung der beim Trockenkühlen von Koks mittels eines Gases anfallenden fühlbaren Wärme, bei dem ein Kreislaufgas zur Vorerhitzung der Einsatzkohle für die Kokserzeugung nach der Kokskühlkammer durch einen Abhitzekessel oder dergleichen Wärmeverbraucher und von dort nach Staubabscheidung wieder zurück in die Kokskühlkammer geführt wird, wobei überschüssiges Kreislaufgas aus dem Kreislauf ausgeschleust wird.

Bei bekannten Kokskühlanlagen, die im Kreislaufbetrieb mit Dampferzeugung arbeiten, wird das Kühlgas nach der Abkühlung im Dampfkessel mit ca. $150^{\circ}C$ in die Kühlkammer zurückgeführt. Um den Koks auf ca. $200^{\circ}C$ herunterzukühlen, ist eine entsprechend hohe Kühlgasmenge und eine entsprechend große Kühlkammer erforderlich, die mit Feuerfestmaterial ausgemauert hohe Investitionskosten erfordert.

Weiterhin ist bekannt, die Einsatzkohle für die Kokserzeugung in Koksöfen mittels Rauchgas oder Gichtgas als Trägergas vorzuerhitzen, das dem Koks die fühlbare Wärme in einer Kokstrockenkühlung entzogen hat. Die Verwendung von Gichtgas als Trägergas ist aus der DE-PS 27 33 365 bekannt. Bei diesem Verfahren, das in der Hauptsache für Hüttenkokereien geeignet ist, wo Gichtgas zur Verfügung steht, wird das abgekühlte Gichtgas nach dem Erhitzen der Einsatzkohle wieder in das Netz zurückgegeben.

Bei allen Kreislaufprozessen nimmt die Menge des Kreislaufgases durch Vergasung (Koksabbrand) und Nachentgasung des Kokses zu, so daß ständig ein bestimmter Teil des Kreislaufgases abgeführt werden muß. Bei dem aus der GB-PS 1 334 373 bekannten Verfahren wird Rauchgas als Trägergas benutzt. Aufgrund des Restsauerstoffgehaltes in jedem Rauchgas ist auch die Gaszunahme und damit der Verlust von Koks durch Abbrand höher als bei Brenngasen, so daß auch die Menge des abzuführenden Kreislaufgases größer ist. Dieses mit Schadstoffen angereicherte Gas wird an die Atmosphäre abgegeben, wozu entsprechend aufwendige Aufbereitungsstufen, wie Nachverbrennung, Entstaubung und eventuell eine Entschwefelung notwendig werden.

Aufgabe der vorliegenden Erfindung ist es, die Voraussetzungen für eine kostengünstigere Durchführung eines trockenen Kokskühlverfahrens zu schaffen, bei dem das Trägergas in einem geschlossenen Kreislauf zwischen Kokstrockenkühlung und Kohlevorerhitzung geführt wird und dessen überschüssiges Kreislaufgas umweltfreundlich beseitigt wird.

Diese Aufgabe wird erfindungsgemäß dadurch gelöst, daß das den Abhitzedampfkessel verlassende Kreislaufgas vor Eintritt in die Kokskühlkammer in einem kombinierten Wascher-Kühler auf etwa Kühlmitteltemperatur heruntergekühlt und dabei entstaubt wird.

Hierdurch kann die Kokskühlkammer erheblich verkleinert werden. Das Kreislaufgas wird nicht, wie üblich, mit einem Trockenabscheider vom Staub befreit, sondern mit einem kombinierten Naß-Wascher-Kühler. Hierin wird das Kreislaufgas nicht nur gereinigt, sondern gleichzeitig auf eine Temperatur nahe der Temperatur des eingesetzten Kühlmittels heruntergekühlt. Weil das Kreislaufgas, das in die Kokskühlkammer zurückgeführt wird, erfindungsgemäß eine wesentlich niedrigere Temperatur von beispielsweise

0151727

unter 20°C hat, kann die Kreislaufgasmenge erheblich herabgesetzt werden und damit auch die Kokskühlkammer selbst wesentlich kleiner sein. Aufgrund der geringeren Kreislaufgasmenge ist auch nur ein Gebläse von niedrigerer Leistung und einem geringeren Energieverbrauch für das Betreiben des Gebläses erforderlich. Die Investitions- und Betriebskosten werden durch die erfindungsgemäßen Maßnahmen erheblich gesenkt.

Des weiteren kann durch Einsetzen eines zusätzlichen Kühlaggregates oder ähnlich einer Wärmepumpe eine weitere Kühlung des den Wascher-Kühler verlassenden Kreislaufgases vor Eintritt in die Kokskühlkammer vorgenommen werden, wodurch die Kreislaufgasmenge nochmals reduziert und gleichzeitig ein Teil des Wasserdampfes aus dem Kreislaufgas auskondensiert werden kann. Das somit fast trockene Gas verhält sich wie ein Kreislaufgas im normalen trockenen Kokskühlungsprozeß und vermeidet zusätzlichen Koksabbrand. Damit wird das erfindungsgemäße Verfahren noch kostengünstiger.

Ferner besteht die Erfindung darin, daß das Kreislaufgas zwischen der Kokstrockenkühlung und der Kohlevorerhitzung aus einem Brenngas besteht, dessen Einstellung des gewünschten Heizwertes durch Einspeisen von Stickstoff oder gereinigtem Rauchgas in das kalte Kreislaufgas vor dem Kokstrockenkühler und/oder durch Einspeisen von Luft in das heiße Kreislaufgas hinter dem Kokstrockenkühler erfolgt und daß aus der Kreislaufleitung vor dem Kokstrockenkühler überschüssiges kaltes Kreislaufgas abgezogen und dem Unterfeuerungsgas für die Koksöfen zugemischt wird.

Die Erfindung sieht außerdem vor, daß überschüssiges heißes Kreislaufgas, d.h. ein nicht für die Kohlevorerhitzung benötigter Anteil des Kreislaufgases, zwischen der Kokskühlkammer und der Vorerhitzungsanlage abgezogen, durch einen Abhitzekessel geleitet und dem die Vorerhitzungsanlage verlassenden Gas beigemischt wird.

Bei einer bevorzugten Ausführungsform der Erfindung wird ein Teil des aus der Vorerhitzungsanlage austretenden, abgekühlten Gases zur Einstellung der Betriebstemperatur entnommen und in die von der Kokskühlkammer zur Vorerhitzungsanlage führende Leitung eingespeist.

Das Verfahren gemäß vorliegender Erfindung ist insbesondere für den Einsatz in Zechenkokereien geeignet und ist äußerst umweltfreundlich, da das Überschußgas dem Unterfeuerungsgas für die Koksöfen beigemischt werden kann, so daß Aufbereitungsanlagen entfallen.

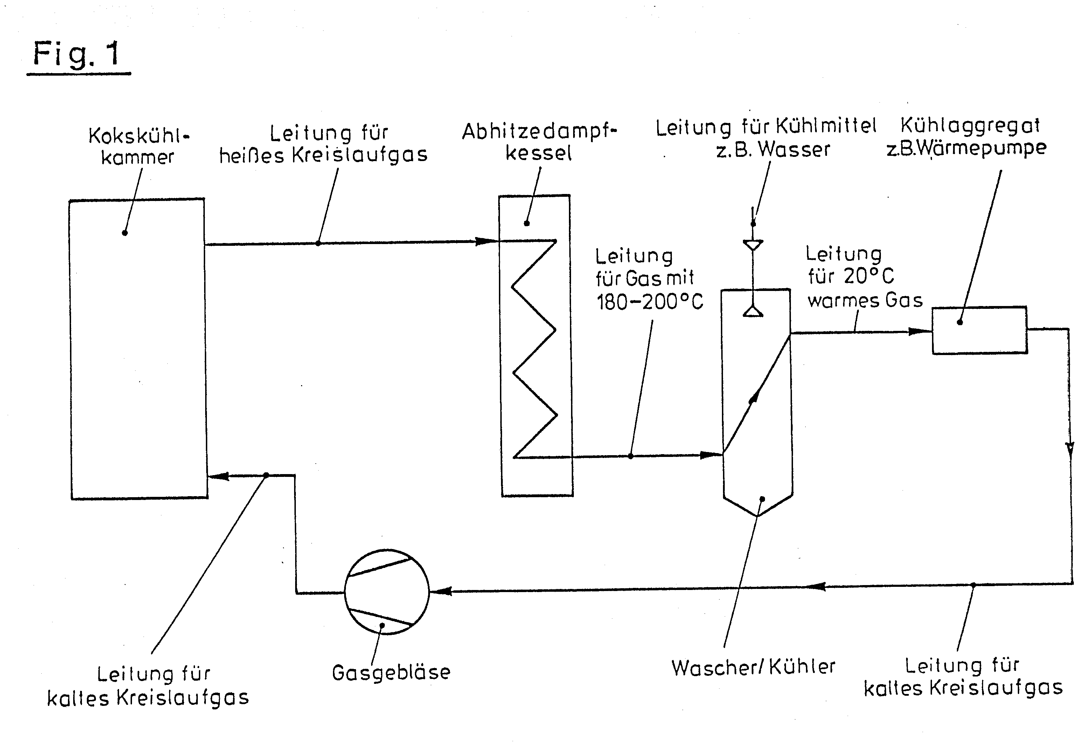

Die Erfindung soll im folgenden an Hand von zwei Schema-Zeichnungen erläutert werden. In Figur 1 ist das Verfahrensschema zur Durchführung des erfindungsgemäßen Kokskühlverfahrens nach Anspruch 1 und 2 dargestellt.

Das heiße Kreislaufgas verläßt die Kokskühlkammer und wird über eine Leitung zu dem Abhitzedampfkessel geleitet. Das Kreislaufgas verläßt den Abhitzedampfkessel über eine Leitung mit ca. 180 bis $200^{\circ}$C und wird zu einem kombinierten Wascher-Kühler geführt, in den über eine Leitung Kühlmittel, zum Beispiel Wasser, eingesprüht wird. Hierdurch erfolgt eine Entstaubung und gleichzeitig eine Kühlung des Kreislaufgases auf etwa Kühlmitteltemperatur, beispielsweise etwa $20^{\circ}$C. Das so heruntergekühlte Kreislaufgas wird von dem Wascher-Kühler über eine Leitung an ein zum Beispiel nach Art einer Wärmepumpe arbeitendes Kühlaggregat weitergegeben und noch weiter heruntergekühlt. Das so weit heruntergekühlte Kreislaufgas wird über eine Leitung, ein Gebläse und wiederum eine Leitung in die Kokskühlkammer zurückgeführt.

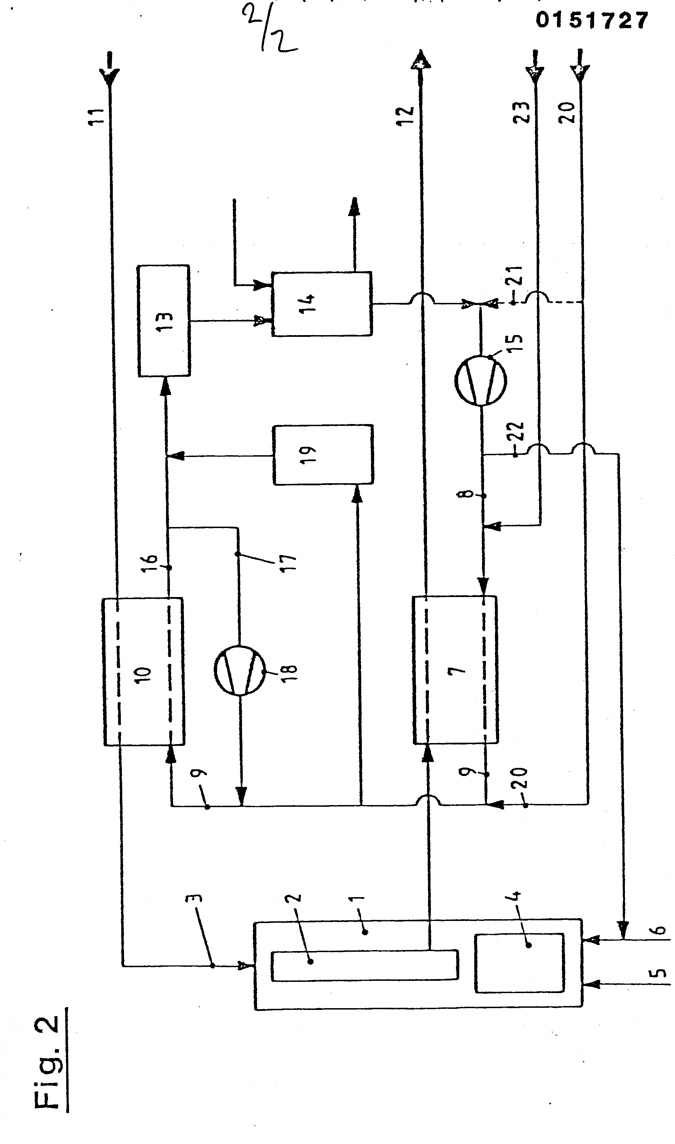

In Figur 2 wird das erfindungsgemäße Verfahren nach den Ansprüchen 1, 3, 4 und 5 verdeutlicht. Mit 1 ist ein Koksofen bezeichnet, in dessen Kammer 2 vorerhitzte Kohle über ein Leitungssystem 3 von oben über nicht dargestellte verschließbare Füllöcher eingefüllt wird. Heizgas und Verbrennungsluft werden über die Leitungen 5 und 6 zugeführt und gelangen über die Regeneratoren 4 in die die Ofenkammer umgebenden Heizzüge. Der Abzug der bei der trockenen Destillation entstehenden Gase erfolgt in üblicher Weise über nicht dargestellte Steigerohre in eine Vorlage.

Der aus dem Koksofen gedrückte, ca. 1.000°C heiße Koks wird mittels eines Kübels über eine druckdichte Schleuse chargenweise in die Anlage 7 zur Trockenkühlung des Kokses gefüllt und gibt hier seine fühlbare Wärme an das Kreislaufgas ab. Der auf eine Temperatur von $\leqq$ 200°C abgekühlte Koks verläßt den Trockenkühler über den Weg 12. Das Kreislaufgas tritt in den Trockenkühler 7 über die Leitung 8 ein und verläßt ihm über die Leitung 9, über die das heiße Gas in die Anlage 10 zur Vorerhitzung der Kohle gelangt. Die Kokskohle wird der Vorerhitzungsanlage über den Weg 11 zugeführt und über den Weg 3 in die Kammer des Koksofens gefüllt.

Das die Vorerhitzungsanlage verlassende Kreislaufgas wird, nachdem es weitestgehend, z.B. in einem elektrostatischen Staubfilter 13, von mitgerissenem Staub befreit ist, in einem Gaskühler 14 auf die gewünschte Endtemperatur von z.B. 30 bis 40°C heruntergekühlt und gelangt über ein Druckerhöhungsgebläse 15 und die Leitung 8 wieder zum Trockenkühler 7.

Die Einstellung der Betriebstemperatur der Vorerhitzungsanlage 10 wird in der Weise vorgenommen, daß der zum Filter 13 führenden Leitung 16 eine bestimmte Menge abgekühlten Gases über die Leitung 17 entnommen und über ein Druckerhöhungsgebläse 18 in die Leitung 9 eingespeist wird. Der nicht für die Vorerhitzung der Kokskohle benötigte Teil des den Trockenkühler verlassenden Gases wird der Leitung 9 zur Dampferzeugung in einem Abhitzekessel 19 entnommen und von dort in die zu dem Filter 13 führende Leitung 16 geleitet.

Erfindungsgemäß dient als Wärmeträger ein im geschlossenen Kreislauf geführtes Brenngas. Das Kreislaufgas kann beim Anfahren der Anlage erzeugt werden, indem über die in der Zeichnung gestrichelt dargestellte Leitung 21, die nur beim Anfahren benutzt wird und von der Hauptluftleitung 20 abgezweigt ist, Luft in den Trockenkühler 7 eingeleitet wird. Die Luft reagiert mit dem heißen Koks und verbrennt bzw. vergast einen geringen Teil des Kokses. Während des Betriebs reichert sich das Kreislaufgas durch Koksabbrand, Vergasung und Nachentgasung an. Das Überschußgas wird dem Kreislauf zwischen dem Druckerhöhungsgebläse 15 und dem Trockenkühler über die Leitung 22 entnommen und in die Heizgasleitung 6 eingespeist, d. h. dem Unterfeuerungsgas für die Koksöfen zugemischt.

Um den gewünschten Heizwert des Kreislaufgases, dessen Hu-Wert vorzugsweise zwischen 2.900 und 6.300 $kJ/m^3_N$ liegt, konstant zu halten, besteht die Möglichkeit, dem Kreislaufgas wahlweise Stickstoff oder gereinigtes Rauchgas und/oder Luft beizumischen. Die Zugabe von Luft, die wesentlich billiger ist, bewirkt zusätzlich eine Reduzierung des Wasserstoffgehaltes und eine geringe Erhöhung des Wärmepotentials. Die Zugabe der Luft erfolgt über die Leitung 20 in die Leitung 9, wo die Luft hinter dem Trockenkühler in das heiße Gas eingespeist wird. Rauchgas oder Stickstoff werden dem kalten Kreislaufgas über die Leitung 23 zwischen dem Gebläse 15 und dem Trockenkühler 7 zugeführt. Der Betriebsdruck im Kokstrockenkühler liegt auf einem Druckniveau von ca. 1.400 mm WS, damit das Kreislaufgas ohne Druckerhöhung die anschließenden Verfahrensstufen durchlaufen kann und im System an keiner Stelle Unterdruck herrscht.

0151727

-1-

Verfahren zur Nutzung der beim Trockenkühlen von Koks mittels
eines Gases anfallenden fühlbaren Wärme

Patentansprüche:

1. Verfahren zur Nutzung der beim Trockenkühlen von Koks mittels eines Gases anfallenden fühlbaren Wärme, bei dem ein Kreislaufgas zur Vorerhitzung der Einsatzkohle für die Kokserzeugung nach der Kokskühlkammer durch einen Abhitzekessel oder dergleichen Wärmeverbraucher und von dort nach Staubabscheidung wieder zurück in die Kokskühlkammer geführt wird, wobei überschüssiges Kreislaufgas aus dem Kreislauf ausgeschleust wird, dadurch gekennzeichnet, daß das den Abhitzekessel verlassende Kreislaufgas vor Eintritt in die Kokskühlkammer in einem kombinierten Wascher-Kühler auf etwa Kühlmitteltemperatur heruntergekühlt und dabei entstaubt wird.

2. Verfahren nach Anspruch 1, dadurch gekennzeichnet, daß das den Wascher-Kühler verlassende Kreislaufgas vor Eintritt in die Kokskühlkammer durch ein Kühlaggregat oder einen Wärmetauscher geführt wird.

3. Verfahren nach Anspruch 1, dadurch gekennzeichnet, daß das Kreislaufgas zwischen der Kokstrockenkühlung und der Kohlevorerhitzung aus einem Brenngas besteht, dessen Einstellung des gewünschten Heizwertes durch Einspeisen von Stickstoff oder gereinigtem Rauchgas in das kalte Kreislaufgas vor dem Kokstrockenkühler und/oder durch Einspeisen von Luft in das heiße Kreislaufgas hinter dem Kokstrockenkühler erfolgt und daß aus der Kreislaufleitung vor dem Kokstrockenkühler überschüssiges kaltes Kreislaufgas abgezogen und dem Unterfeuerungsgas für die Koksöfen zugemischt wird.

- 2 -

4. Verfahren nach den Ansprüchen 1 und 3, dadurch gekennzeichnet, daß überschüssiges heißes Kreislaufgas zwischen der Kokskühlkammer und der Vorerhitzungsanlage abgezogen, durch einen Abhitzedampfkessel geleitet und dem die Vorerhitzungsanlage verlassenden Gas beigemischt wird.

5. Verfahren nach den Ansprüchen 1, 3 und 4, dadurch gekennzeichnet, daß ein Teil des aus der Vorerhitzungsanlage austretenden, abgekühlten Gases zur Einstellung der Betriebstemperatur entnommen und in die von der Kokskühlkammer zur Vorerhitzungsanlage führende Leitung eingespeist wird.

# Fig. 1

Kokskühl-kammer · Leitung für heißes Kreislaufgas · Abhitzedampf-kessel · Leitung für Kühlmittel z.B. Wasser · Kühlaggregat z.B. Wärmepumpe · Leitung für Gas mit 180–200°C · Leitung für 20°C warmes Gas · Leitung für kaltes Kreislaufgas · Gasgebläse · Wascher/Kühler · Leitung für kaltes Kreislaufgas

# Fig. 2